# EUROPÄISCHE PATENTSCHRIFT

(11) **EP 4 051 934 B1**
(45) Veröffentlichungstag und Bekanntmachung des Hinweises auf die Patenterteilung: **06.11.2024**
(21) Anmeldenummer: 20780594.6
(22) Anmeldetag: 18.09.2020
(51) Int. Cl.: F16K 11/044, F16K 11/00, F16K 31/00, G05D 23/13

(54) **MISCHKARTUSCHE MIT KEILFÖRMIGEN WIRBELKÖRPERN**
MIXER CARTRIDGE COMPRISING WEDGE-SHAPED SWIRLING BODIES
CARTOUCHE DE MÉLANGEUR COMPRENANT DES CORPS TOURBILLONNAIRES EN FORME DE COIN

(30) Priorität: 28.10.2019 DE 102019129058
(43) Veröffentlichungstag der Anmeldung: 07.09.2022
(73) Patentinhaber: Grohe AG, 58675 Hemer (DE)
(72) Erfinder: KOSTORZ, Ole Benedikt, 58706 Menden (DE); KICK, Jonas, 58706 Menden (DE)
(86) Internationale Anmeldenummer: PCT/EP2020/076105
(87) Internationale Veröffentlichungsnummer: WO 2021/083576

(56) Entgegenhaltungen:
- EP-A1- 2 407 849
- EP-A2- 1 496 415
- WO-A1-97/32147
- DE-A1- 102007 055 455
- DE-A1- 19 610 778
- JP-A- 2008 202 702
- US-A1- 2008 191 043
- US-A1- 2013 099 007

## Beschreibung

Die vorliegende Erfindung betrifft eine Mischkartusche für eine Sanitärarmatur, mittels der Kaltwasser und Warmwasser zu einem Mischwasser mit einer gewünschten Mischwassertemperatur mischbar sind. Sanitärarmaturen dienen insbesondere der bedarfsgerechten Bereitstellung des Mischwassers an einem Waschbecken, einem Spülbecken, einer Dusche oder einer Badewanne. Bekannt sind Mischkartuschen, bei dem die Mischwassertemperatur des Mischwassers durch ein Dehnstoffelement regelbar ist. Da die bis zu dem Dehnstoffelement durch das Kaltwasser und Warmwasser zurückgelegte Strecke sehr kurz ist, sind das Kaltwasser und das Warmwasser bei Erreichen des Dehnstoffelements häufig nicht gut durchmischt. Aufgrund der Strömungsverhältnisse in den Mischkartuschen weicht die am Dehnstoffelement vorliegende Temperatur zum Teil deutlich von der Mischwassertemperatur des (vollständig gemischten) Mischwassers ab, sodass die Mischwassertemperatur durch das Dehnstoffelement nicht optimal regelbar ist.

Aus US 2008/0191043 A1, US 2013/0099007 A1, WO 97/32147 A1, JP 2008202701 A und DE 10 2007 055 455 A1 sind jeweils Mischkartuschen bekannt geworden, in denen ein eine Mehrzahl von keilförmigen Wirbelkörpern umfassendes Wirbelelement vorgesehen ist.

Aufgabe der Erfindung ist es daher, die mit Bezug auf den Stand der Technik geschilderten Probleme zumindest teilweise zu lösen und insbesondere eine Mischkartusche für eine Sanitärarmatur anzugeben, durch die die Mischwassertemperatur des Mischwassers besser regelbar ist. Diese Aufgabe wird gelöst mit einer Mischkartusche gemäß den Merkmalen des unabhängigen Patentanspruchs. Weitere vorteilhafte Ausgestaltungen der Mischkartusche sind in den abhängigen Patentansprüchen angegeben. über hinaus werden die in den Patentansprüchen angegebenen Merkmale in der Beschreibung näher präzisiert und erläutert, wobei weitere bevorzugte Ausgestaltungen der Erfindung dargestellt werden.

Hierzu trägt eine Mischkartusche für eine Sanitärarmatur bei, die zumindest die folgenden Komponenten aufweist:
- eine Mischkammer mit zumindest einem Warmwassereinlass für Warmwasser und zumindest einem Kaltwassereinlass für Kaltwasser, und
- ein Wirbelelement zum zumindest teilweisen Verwirbeln des Warmwassers und des Kaltwassers in der Mischkammer, wobei das Wirbelelement eine Mehrzahl von äußeren keilförmigen Wirbelkörpern und eine Mehrzahl von inneren keilförmigen Wirbelkörpern umfasst.

Die Mischkartusche ist insbesondere mit einer Sanitärarmatur verwendbar, die der bedarfsgerechten Bereitstellung eines Mischwassers an einem Waschbecken, einem Spülbecken, einer Dusche oder einer Badewanne dient. Hierzu kann der Mischkartusche insbesondere Kaltwasser mit einer Kaltwassertemperatur und Warmwasser mit einer Warmwassertemperatur zuführbar sein. Das Kaltwasser und das Warmwasser ist durch die Mischkartusche zu dem Mischwasser mit einer gewünschten Mischwassertemperatur mischbar. Die Mischwassertemperatur ist insbesondere durch ein Regelelement, beispielsweise nach Art eines Dehnstoffelement, der Mischkartusche regelbar. Die Kaltwassertemperatur beträgt insbesondere maximal 25 °C (Celsius), bevorzugt 1 °C bis 25 °C, besonders bevorzugt 5 °C bis 20 °C und/oder die Warmwassertemperatur insbesondere maximal 90 °C, bevorzugt 25 °C bis 90 °C, besonders bevorzugt 55 °C bis 65 °C. Die Mischkartusche kann beispielsweise in einem Armaturengehäuse der Sanitärarmatur angeordnet sein. Das Armaturengehäuse besteht insbesondere zumindest teilweise aus Kunststoff und/oder (Guss-)Metall, wie zum Beispiel Messing. Das Armaturengehäuse kann an einem Träger, beispielsweise einer Arbeitsplatte, einem Spülbecken, einem Waschbecken, einer Badewanne oder einer Dusche, befestigbar sein.

Die Mischkartusche weist eine Mischkammer auf, in der das Warmwasser und das Kaltwasser mischbar sind. Die Mischkammer ist insbesondere innerhalb eines, insbesondere (im Wesentlichen) rohrförmigen und/oder sich entlang einer Längsachse erstreckenden, Gehäuses der Mischkartusche ausgebildet. In die Mischkammer mündet zumindest ein Warmwassereinlass für das Warmwasser und zumindest ein Kaltwassereinlass für das Kaltwasser. Innerhalb der Mischkammer ist ein Wirbelelement angeordnet, das dem zumindest teilweisen Verwirbeln des Warmwassers und des Kaltwassers in der Mischkammer dient. Hierzu umfasst das Wirbelelement eine Mehrzahl von äußeren keilförmigen Wirbelkörpern und eine Mehrzahl von inneren keilförmigen Wirbelkörpern. Die Begriffe "äußeren" und "inneren" beziehen sich insbesondere auf eine radiale Richtung, d. h. insbesondere orthogonal zu der Längsachse, der Mischkartusche bzw. des Wirbelelements. Die äußeren keilförmigen Wirbelkörper sind somit in der radialen Richtung weiter außen angeordnet als die inneren keilförmigen Wirbelkörper. Die äußeren keilförmigen Wirbelkörper und die inneren keilförmigen Wirbelkörper sind in der radialen Richtung jedoch insbesondere unmittelbar nebeneinander angeordnet bzw. kontaktieren sich. Unter "keilförmig" ist hier zu verstehen, dass die Wirbelkörper einen zugespitzten Kopf (erfindungsgemäß) bzw. insbesondere eine zugespitzte Kante oder Bereich aufweisen. Die Wirbelkörper werden ausgehend von dem zugespitzten Kopf bzw. von der zugespitzten Kante oder dem zugespitzten Bereich, insbesondere in Strömungsrichtung des Kaltwassers und Warmwassers und/oder einer Längsrichtung der Mischkartusche, breiter. Die Breite der Wirbelkörper nimmt dabei insbesondere in einer Umfangsrichtung der Mischkartusche zu. Eine Dicke der Wirbelkörper in der radialen Richtung ist insbesondere (im Wesentlichen) konstant. Die Längsrichtung verläuft insbesondere parallel zu der Längsachse.

Die Wirbelkörper sind jeweils aus zwei Schenkeln (erfindungsgemäß) bzw. Beinen gebildet, die sich ausgehend von dem zugespitzten Kopf (bzw. der zugespitzten Kante oder dem zugespitzten Bereich) V-förmig erstrecken. Die Schenkel bzw. Beine können an ihren zu dem Kopf gegenüberliegenden Enden mit einem Fuß enden. Die einzelnen äußeren keilförmigen Wirbelkörper und die einzelnen inneren keilförmigen Wirbelkörper sind insbesondere identisch ausgebildet. Weiterhin kann das Wirbelelement beispielsweise 2 bis 20 äußere keilförmige Wirbelkörper und/oder 2 bis 20 innere keilförmige Wirbelkörper umfassen. Die äußeren keilförmigen Wirbelkörper und inneren keilförmigen Wirbelkörper verwirbeln das Warmwasser und das Kaltwasser in der Mischkammer zumindest teilweise (in die radiale Richtung). Hierdurch kann eine innere Strömungsschicht (beispielsweise aus Warmwasser) von dem Regelelement abgezogen und mit einer äußeren Strömungsschicht (beispielsweise aus Kaltwasser) zumindest teilweise verwirbelt werden. Dadurch entspricht ein Mittelwert der Temperatur am Regelelement exakter der Mischwassertemperatur nach der vollständigen Durchmischung des Warmwassers und des Kaltwassers, wodurch sich das Regelverhalten der Mischkartusche verbessert.

Die äußeren keilförmigen Wirbelkörper und die inneren keilförmigen Wirbelkörper können an einer Hülse ausgebildet sein. Die Hülse ist insbesondere zumindest teilweise rohrförmig ausgebildet. Weiterhin sind die äußeren keilförmigen Wirbelkörper und die inneren keilförmigen Wirbelkörper insbesondere an einer inneren Umfangsfläche der Hülse ausgebildet.

Die äußeren keilförmigen Wirbelkörper und die inneren keilförmigen Wirbelkörper können ringförmig angeordnet sein.

Die äußeren keilförmigen Wirbelkörper können in einer Umfangsrichtung voneinander beabstandet sein. Dies kann bedeuten, dass zwischen den einzelnen äußeren keilförmigen Wirbelkörper Kanäle gebildet sind, durch das das Warmwasser und das Kaltwasser fließen können.

Die inneren keilförmigen Wirbelkörper können in einer Umfangsrichtung voneinander beabstandet sein. Dies kann bedeuten, dass zwischen den einzelnen inneren keilförmigen Wirbelkörper Kanäle gebildet sind, durch die das Warmwasser und das Kaltwasser fließen können.

Die äußeren keilförmigen Wirbelkörper und die inneren keilförmigen Wirbelkörper können in einer Umfangsrichtung versetzt zueinander angeordnet sein. Dies kann insbesondere bedeuten, dass die äußeren keilförmigen Wirbelkörper und inneren keilförmigen Wirbelkörper in der radialen Richtung nicht (vollständig) miteinander fluchten.

Die inneren keilförmigen Wirbelkörper können an den äußeren keilförmigen Wirbelkörpern befestigt sein. Insbesondere können die inneren keilförmigen Wirbelkörper stoffschlüssig mit den äußeren keilförmigen Wirbelkörpern verbunden sein. Weiterhin sind die inneren keilförmigen Wirbelkörper insbesondere (nur) an den Füßen der Schenkel an den äußeren keilförmigen Wirbelkörpern befestigt.

Das Wirbelelement kann ein Regelelement zum Regeln der Mischwassertemperatur des Mischwassers umgeben. Dies kann insbesondere auch bedeuten, dass das Regelelement sich durch das Wirbelelement erstreckt. Das Regelelement ist insbesondere nach Art eines Dehnstoffelements ausgebildet.

Das Wirbelelement kann in einem Ringspalt zwischen dem Regelelement und dem Gehäuse der Mischkartusche angeordnet sein. Dabei können die äußeren keilförmigen Wirbelkörper in der radialen Richtung insbesondere das Gehäuse und/oder die inneren keilförmigen Wirbelkörper in der radialen Richtung insbesondere das Regelelement kontaktieren.

Die Mischkartusche kann einen Regelschieber zum Regeln eines Durchflusses des Warmwassers durch den Warmwassereinlass und eines Durchflusses des Kaltwassers durch den Kaltwassereinlass aufweisen, wobei der Regelschieber durch das Regelelement in einer axialen Richtung der Mischkartusche verstellbar ist und wobei in dem Regelschieber eine erste Anzahl Kaltwasserkanäle für das Kaltwasser und eine zweite Anzahl Warmwasserkanäle für das Warmwasser ausgebildet sind und wobei die erste Anzahl und die zweite Anzahl von einer dritten Anzahl der äußeren keilförmigen Wirbelkörper und einer vierten Anzahl der inneren keilförmigen Wirbelkörper abweicht. Mit Hilfe des Regelschiebers können der Warmwassereinlass bzw. ein Warmwasserregelspalt und der Kaltwassereinlass bzw. ein Kaltwasserregelspalt zumindest teilweise geschlossen und geöffnet werden, um ein Mischungsverhältnis zwischen dem Warmwasser und dem Kaltwasser zur Regelung der Mischwassertemperatur zu steuern. Die von der Anzahl der äußeren und inneren keilförmigen Wirbelkörper abweichende Anzahl der Kaltwasserkanäle und Warmwasserkanäle führt zu einer ungleichen Teilung zwischen den äußeren und inneren keilförmigen Wirbelkörpern einerseits und den Kaltwasserkanälen und Warmwasserkanälen andererseits. Hierdurch wird die Verwirbelung des Warmwassers und des Kaltwassers weiter verbessert.

Die Erfindung sowie das technische Umfeld werden nachfolgend anhand der Figuren näher erläutert. Es ist darauf hinzuweisen, dass die Figuren eine besonders bevorzugte Ausführungsvariante der Erfindung zeigen, diese jedoch nicht darauf beschränkt ist. Dabei sind gleiche Bauteile in den Figuren mit denselben Bezugszeichen versehen. Es zeigen beispielhaft und schematisch:
- Fig. 1:: eine Mischkartusche in einem Längsschnitt;
- Fig. 2:: eine Hülse der Mischkartusche mit einem Wirbelelement;
- Fig. 3:: die Mischkartusche in eine Detailansicht; und
- Fig. 4:: die Hülse und ein Regelschieber der Mischkartusche in einem Querschnitt.

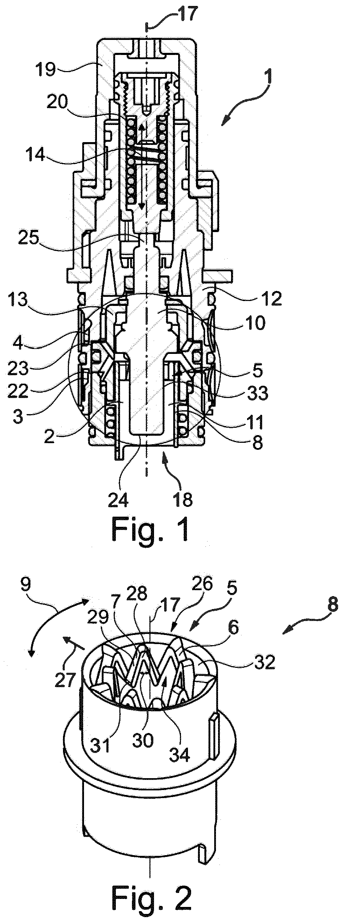

Die Fig. 1 zeigt eine Mischkartusche 1 im Längsschnitt, durch die ein Kaltwasser und ein Warmwasser zu einem Mischwasser mit einer Mischwassertemperatur erzeugbar ist. Die Mischkartusche 1 weist ein Gehäuse 12 auf, das (im Wesentlichen) rohrförmig ausgebildet ist und sich entlang einer Längsachse 17 der Mischkartusche 1 erstreckt. In dem Gehäuse 12 ist zumindest ein Warmwassereinlass 3 und zumindest ein Kaltwassereinlass 4 ausgebildet. Die hier gezeigte Ausführungsvariante der Mischkartusche weist eine Mehrzahl von Warmwassereinlässen 3 und Kaltwassereinlässen 4 auf, die in einer in der Fig. 2 gezeigten Umfangsrichtung 9 des Gehäuses 12 verteilt angeordnet sind. Über die Warmwassereinlässe 3 ist das Warmwasser und über die Kaltwassereinlässe 4 ist das Kaltwasser in eine Mischkammer 2 der Mischkartusche 1 führbar. Somit ist die Mischkammer 2 den Warmwassereinlässen 3 und den Kaltwassereinlässen 4 in einer Strömungsrichtung des Wassers nachgeordnet. Die Mischkammer 2 beginnt in einem Bereich, in dem das Warmwasser und das Kaltwasser aufeinandertreffen. In der Mischkammer 2 sind das Warmwasser und das Kaltwasser zumindest teilweise zu einem Mischwasser mit einer Mischwassertemperatur mischbar. Der Mischkammer 2 ist in Strömungsrichtung des Wassers ein Mischwasserauslass 18 nachgeordnet, durch den das Mischwasser mit der Mischwassertemperatur die Mischkartusche 1 verlassen kann. Von dem Mischwasserauslass 18 ist das Mischwasser beispielsweise einer Sanitärarmatur zuführbar.

Die Mischwassertemperatur des Mischwassers wird durch ein Mischungsverhältnis zwischen dem Warmwasser und dem Kaltwasser sowie einer Warmwassertemperatur des Warmwassers und einer Kaltwassertemperatur des Kaltwassers bestimmt. Zur Einstellung der Mischwassertemperatur weist die Mischkartusche 1 ein Bedienelement 19 auf, das mittels einer Schraubverbindung mit einem Schraubelement 20 verbunden ist. Durch eine Drehung des Bedienelements 19 wird das Schraubelement 20 durch die Schraubverbindung in einer axialen Richtung 14, d. h. parallel zu der Längsachse 17, verstellt. Die Bewegung des Schraubelements 20 in die axiale Richtung 14 wird auf ein Regelelement 10 übertragen, das wiederum einen Regelschieber 13 in der axialen Richtung 14 bewegt. Je nach Position des Regelschiebers 13 in der axialen Richtung kann es einen Warmwasserregelspalt 22 und einen Kaltwasserregelspalt 23 wechselweise öffnen und schließen. Je nach Position des Regelschiebers 13 wird eine entsprechende Menge Warmwasser und Kaltwasser in die Mischkartusche 1 durch den Warmwasserregelspalt 22 und den Kaltwasserregelspalt 23 geleitet, woraus das Mischwasser mit einer entsprechenden Mischwassertemperatur gemischt wird. Bei der vorliegenden Ausführungsvariante der Mischkartusche 1 erstrecken sich der der Warmwasserregelspalt 22 und der Kaltwasserregelspalt 23 in die Umfangsrichtung 9 (vgl. Fig. 2) um die Mischkartusche 1. Das Regelelement 10 kann zumindest teilweise aus einem Wärmeausdehnungsmaterial bestehen. Hierdurch dehnt sich das Regelelement 10 insbesondere in die axiale Richtung 14 aus, wenn es erwärmt wird, und zieht sich insbesondere in die axiale Richtung 14 zusammen, wenn es abgekühlt wird. Dadurch kann das Regelelement 10 das Mischwasser auf einer (im Wesentlichen) konstanten Mischwassertemperatur halten. Strömt beispielsweise zu viel Warmwasser oder zu wenig Kaltwasser in die Mischkartusche 1, erwärmt und dehnt sich das Regelelement 10, wodurch es den Regelschieber 13 in der axialen Richtung 14 in Richtung des Mischwasserauslasses 18 verstellt, sodass der Warmwasserregelspalt 22 verkleinert und der Kaltwasserregelspalt 23 vergrößert wird. Somit strömt weniger Warmwasser und mehr Kaltwasser in die Mischkammer 2. Strömt beispielsweise zu viel Kaltwasser oder zu wenig Warmwasser in die Mischkartusche 1, zieht sich das Regelelement 10 zusammen, wodurch es den Regelschieber 13 vom Mischwasserauslass 18 wegbewegt, sodass der Warmwasserregelspalt 22 vergrößert und der Kaltwasserregelspalt 23 verkleinert wird. Somit strömt mehr Warmwasser und weniger Kaltwasser in die Mischkammer 2. Das Regelelement 10 weist in der axialen Richtung 14 ein erstes Ende 24, das in Richtung des Mischwasserauslasses 18 orientiert ist, und in der axialen Richtung 14 ein zweites Ende 25 auf, das dem ersten Ende 24 gegenüberliegt und mit dem Schraubelement 20 zusammenwirkt. In einem Ringspalt 11 zwischen dem Regelelement 10 und dem Gehäuse 12 ist eine Hülse 8 mit einem Wirbelelement 5 angeordnet, das der zumindest teilweisen Verwirbelung des Warmwassers und des Kaltwassers in der Mischkammer 2 dient.

Die Fig. 2 zeigt die Hülse 8 mit dem Wirbelelement 5 in einer perspektivischen Darstellung. Das Wirbelelement 5 ist an einem ersten längsseitigen Ende 26 der Hülse 8 ausgebildet und umfasst in einer radialen Richtung 27, d. h. orthogonal zu der Längsachse 17, äußere keilförmige Wirbelkörper 6 und innere keilförmige Wirbelkörper 7. Jeder Wirbelkörper 6, 7 weist einen Kopf 28 und zwei sich von dem Kopf 28 erstreckende Schenkel 29 auf, zwischen denen (in der Umfangsrichtung 9) ein Winkel 30 ausgebildet ist. Die Schenkel 29 weisen jeweils an ihrem zu dem Kopf 28 gegenüberliegenden Ende einen Fuß 31 auf. Die einzelnen äußeren keilförmigen Wirbelkörper 6 und die einzelnen inneren keilförmigen Wirbelkörper 7 sind (im Wesentlichen) identisch. Die äußeren keilförmigen Wirbelkörper 6 sind an einer inneren Umfangsfläche 32 der Hülse 8 ausgebildet, wohingegen die inneren keilförmigen Wirbelkörper 7 mit ihren Füßen 31 an Füßen 31 der äußeren keilförmigen Wirbelkörper befestigt sind.

Die Hülse 8, die äußeren keilförmigen Wirbelkörper 6 und die inneren keilförmigen Wirbelkörper 7 sind hier einstückig, beispielsweise als Kunststoffspritzgussbauteil, ausgebildet.

Weiterhin sind die äußeren keilförmigen Wirbelkörper 6 und die inneren keilförmigen Wirbelkörper 7 ringförmig um die Längsachse 17 angeordnet. Zudem sind die äußeren keilförmigen Wirbelkörper 6 in der Umfangsrichtung 9 voneinander beabstandet, sodass das Kaltwasser und das Warmwasser zwischen den einzelnen äußeren keilförmigen Wirbelkörpern 6 hindurchströmen kann. Auch die inneren keilförmigen Wirbelkörper 7 sind in der Umfangsrichtung 9 voneinander beabstandet, sodass das Kaltwasser und das Warmwasser zwischen den einzelnen inneren keilförmigen Wirbelkörpern 7 hindurchströmen kann. Die äußeren keilförmigen Wirbelkörper 6 und die inneren keilförmigen Wirbelkörper 7 sind in der Umfangsrichtung 9 zudem versetzt zueinander angeordnet. Dies bedeutet insbesondere, dass die inneren keilförmigen Wirbelkörper 7 in der radialen Richtung 27 nicht mit den äußeren keilförmigen Wirbelkörpern 6 fluchten. Die inneren keilförmigen Wirbelkörper 7 liegen (in der radialen Richtung 27) innen an einer in der Fig. 1 gezeigten äußeren Umfangsfläche 33 des Regelelements 10 an, sodass sie den Ringspalt 11 in der radialen Richtung 27 ausfüllen.

Das in die Mischkammer 2 einströmende Kaltwasser und Warmwassertreffen somit in der Mischkammer 2 zunächst auf die Köpfe 28 der äußeren keilförmigen Wirbelkörper 6 und inneren keilförmigen Wirbelkörper 7. Die Schenkel 29 der äußeren keilförmigen Wirbelkörper 6 und inneren keilförmigen Wirbelkörper 7 verjüngen sich anschließend in Richtung der Längsachse 17 den Strömungsquerschnitt, sodass das im Bereich der äußeren keilförmigen Wirbelkörper 6 zuströmenden Kaltwasser und Warmwasser mit dem im Bereich der inneren keilförmigen Wirbelkörper 7 zuströmende Kaltwasser und Warmwasser zumindest teilweise (in der radialen Richtung 27) verwirbelt wird. Das verwirbelte Kaltwasser und Warmwasser verlässt das Wirbelelement 5 anschließend über die in der Umfangsrichtung 9 zwischen den einzelnen äußeren keilförmigen Wirbelkörper 6 und inneren keilförmigen Wirbelkörpern 7 ausgebildeten Kanäle 34.

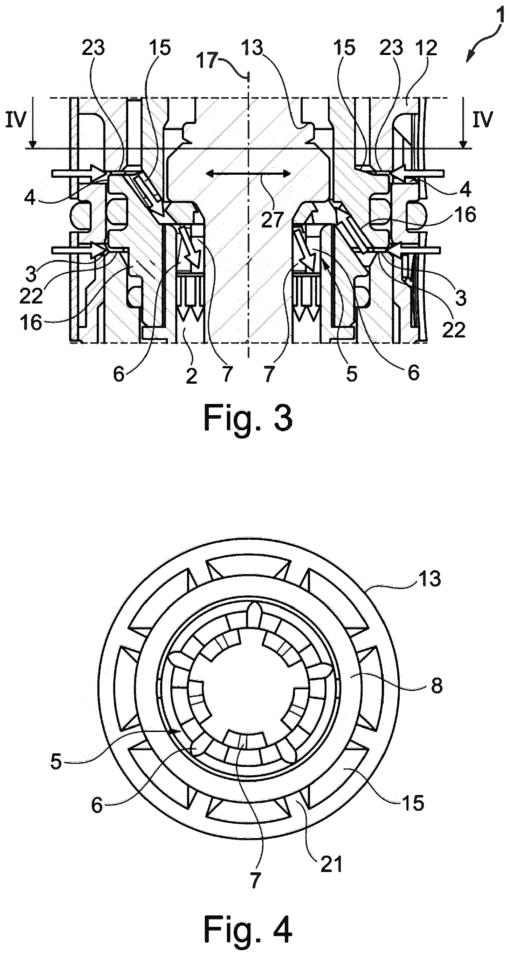

Die Fig. 3 zeigt die Mischkartusche 1 in einer vergrößerten Darstellung in dem in der Fig. 1 mit einem Kreis markierten Bereich. Zu erkennen sind hier die Warmwassereinlässe 3 und Kaltwassereinlässe 4 des Gehäuses 12. Ausgehend von den Warmwassereinlässen 3 strömt das Warmwasser durch die Warmwasserregelspalte 22 und Warmwasserkanäle 16 des Regelschiebers 13 in die Mischkammer 2. Entsprechend strömt das Kaltwasser ausgehend von den Kaltwassereinlässen 4 durch die Kaltwasserregelspalte 23 und Kaltwasserkanäle 15 des Regelschiebers 13 in die Mischkammer 2. Der Strömungsverlauf des Warmwassers und Kaltwassers ist in der Fig. 3 mit Pfeilen dargestellt. In der Mischkammer 2 trifft das Warmwasser und das Kaltwasser auf das Wirbelelement 5 und wird durch die äußeren keilförmigen Wirbelkörper 6 und inneren keilförmigen Wirbelkörper 7 in der radialen Richtung 27 zumindest teilweise verwirbelt.

Die Fig. 4 zeigt die Hülse 8 und den Regelschieber 13 in einer Schnittdarstellung entlang der in der Fig. 3 dargestellten Schnittlinie IV-IV. Zu erkennen ist hier, dass in dem Regelschieber 13 acht Kaltwasserkanäle 15 ausgebildet sind, über die das Kaltwasser aus dem in der Fig. 3 gezeigten Kaltwasserregelspalt 23 zu dem Wirbelelement 5 strömt. Die einzelnen Kaltwasserkanäle 15 sind durch Rippen 21 voneinander getrennt. Die in der Fig. 3 gezeigten Warmwasserkanäle 16 des Regelschiebers 13 sind im Wesentlichen identisch zu den in der Fig. 4 gezeigten Kaltwasserkanälen 15 ausgebildet. Insbesondere umfasst der Regelschieber 13 ebenfalls acht Kaltwasserkanäle 15. zudem ist in der Fig.4 zu erkennen, dass das Wirbelelement 5 fünf äußere keilförmige Wirbelkörper 6 und fünf innere keilförmige Wirbelkörper 7 umfasst. Die Anzahl der Kaltwasserkanäle und die Anzahl der Warmwasserkanäle weicht daher von der Anzahl der äußeren keilförmigen Wirbelkörper 6 bzw. der Anzahl der inneren keilförmigen Wirbelkörper 7 ab. Hierdurch ist eine ungleiche Teilung zwischen den Wirbelkörpern 6, 7 und dem Regelschieber 13 ausgebildet, wodurch eine höhere Verwirbelung des Warmwassers und Kaltwassers erzielt wird.

Durch die vorliegende Erfindung wird das Regelverhalten der Mischkartusche verbessert.

### Bezugszeichenliste

- 1: Mischkartusche
- 2: Mischkammer
- 3: Warmwassereinlass
- 4: Kaltwassereinlass
- 5: Wirbelelement
- 6: äußerer keilförmiger Wirbelkörper
- 7: innerer keilförmiger Wirbelkörper
- 8: Hülse
- 9: Umfangsrichtung
- 10: Regelelement
- 11: Ringspalt
- 12: Gehäuse
- 13: Regelschieber
- 14: axiale Richtung
- 15: Kaltwasserkanal
- 16: Warmwasserkanal
- 17: Längsachse
- 18: Mischwasserauslass
- 19: Bedienelement
- 20: Schraubelement
- 21: Rippen
- 22: Warmwasserregelspalt
- 23: Kaltwasserregelspalt
- 24: erstes Ende
- 25: zweites Ende
- 26: erstes längsseitiges Ende
- 27: radiale Richtung
- 28: Kopf
- 29: Schenkel
- 30: Winkel
- 31: Fuß
- 32: innere Umfangsfläche
- 33: äußere Umfangsfläche
- 34: Kanal

## Patentansprüche

1. Mischkartusche (1) für eine Sanitärarmatur, zumindest aufweisend:
- eine Mischkammer (2) mit zumindest einem Warmwassereinlass (3) für Warmwasser und zumindest einem Kaltwassereinlass (4) für Kaltwasser, und
- ein Wirbelelement (5) zum zumindest teilweisen Verwirbeln des Warmwassers und des Kaltwassers in der Mischkammer (2), wobei das Wirbelelement (5) eine Mehrzahl von radial äußeren keilförmigen Wirbelkörpern (6) und eine Mehrzahl von radial inneren keilförmigen Wirbelkörpern (7) umfasst, **dadurch gekennzeichnet, dass** die Wirbelkörper (6, 7) jeweils einen zugespitzten Kopf (28) aufweisen, wobei die Wirbelkörper (6, 7) jeweils aus zwei Schenkeln (29) gebildet sind, die sich ausgehend von dem zugespitzten Kopf (28) V-förmig erstrecken und wobei zwischen den Schenkeln (29) in Umfangsrichtung (9) der Mischkartusche (1) ein Winkel (30) ausgebildet ist.

2. Mischkartusche (1) nach Patentanspruch 1, wobei die äußeren keilförmigen Wirbelkörper (6) und die inneren keilförmigen Wirbelkörper (7) an einer Hülse (8) ausgebildet sind.

3. Mischkartusche (1) nach einem der vorhergehenden Patentansprüche, wobei die äußeren keilförmigen Wirbelkörper (6) und die inneren keilförmigen Wirbelkörper (7) ringförmig angeordnet sind.

4. Mischkartusche (1) nach einem der vorhergehenden Patentansprüche, wobei die äußeren keilförmigen Wirbelkörper (6) in einer Umfangsrichtung (9) voneinander beabstandet sind.

5. Mischkartusche (1) nach einem der vorhergehenden Patentansprüche, wobei die inneren keilförmigen Wirbelkörper (7) in einer Umfangsrichtung (9) voneinander beabstandet sind.

6. Mischkartusche (1) nach einem der vorhergehenden Patentansprüche, wobei die äußeren keilförmigen Wirbelkörper (6) und die inneren keilförmigen Wirbelkörper (7) in einer Umfangsrichtung (9) versetzt zueinander angeordnet sind.

7. Mischkartusche (1) nach einem der vorhergehenden Patentansprüche, wobei die inneren keilförmigen Wirbelkörper (7) an den äußeren keilförmigen Wirbelkörpern (6) befestigt sind.

8. Mischkartusche (1) nach einem der vorhergehenden Patentansprüche, wobei das Wirbelelement (5) ein Regelelement (10) zum Regeln der Mischwassertemperatur des Mischwassers umgibt.

9. Mischkartusche (1) nach Patentanspruch 8, wobei das Wirbelelement (5) in einem Ringspalt (11) zwischen dem Regelelement (10) und einem Gehäuse (12) der Mischkartusche (1) angeordnet ist.

10. Mischkartusche (1) nach Patentanspruch 8 oder 9, aufweisend einen Regelschieber (13) zum Regeln eines Durchflusses des Warmwassers durch den Warmwassereinlass (3) und eines Durchflusses des Kaltwassers durch den Kaltwassereinlass (4), wobei der Regelschieber (13) durch das Regelelement (10) in einer axialen Richtung (14) der Mischkartusche (1) verstellbar ist und wobei in dem Regelschieber (13) eine erste Anzahl Kaltwasserkanäle (15) für das Kaltwasser und eine zweite Anzahl Warmwasserkanäle (16) für das Warmwasser ausgebildet sind und wobei die erste Anzahl und die zweite Anzahl von einer dritten Anzahl der äußeren keilförmigen Wirbelkörper (6) und einer vierten Anzahl der inneren keilförmigen Wirbelkörper (7) abweicht.

## Claims

1. A mixing cartridge (1) for a sanitary fitting, comprising at least
- a mixing chamber (2) having at least one hot water inlet (3) for hot water and at least one cold water inlet (4) for cold water, and
- a swirling element (5) for at least partially swirling the hot water and the cold water in the mixing chamber (2), wherein the swirling element (5) comprises a plurality of radially outer wedge-shaped swirling bodies (6) and a plurality of radially inner wedge-shaped swirling bodies (7), **characterized in that** the swirling bodies (6, 7) each have a pointed head (28), wherein the swirling bodies (6, 7) are each formed from two legs (29) which extend in a V-shape starting from the pointed head (28), and wherein an angle (30) is formed between the legs (29) in the circumferential direction (9) of the mixing cartridge (1).

2. The mixing cartridge (1) according to claim 1, wherein the outer wedge-shaped swirling bodies (6) and the inner wedge-shaped swirling bodies (7) are formed at a sleeve (8) .

3. The mixing cartridge (1) according to any one of the preceding claims, wherein the outer wedge-shaped swirling bodies (6) and the inner wedge-shaped swirling bodies (7) are arranged in an annular manner.

4. The mixing cartridge (1) according to any one of the preceding claims, wherein the outer wedge-shaped swirling bodies (6) are spaced apart from one another in a circumferential direction (9).

5. The mixing cartridge (1) according to any one of the preceding claims, wherein the inner wedge-shaped swirling bodies (7) are spaced apart from one another in a circumferential direction (9).

6. The mixing cartridge (1) according to any one of the preceding claims, wherein the outer wedge-shaped swirling bodies (6) and the inner wedge-shaped swirling bodies (7) are offset from one another in a circumferential direction (9).

7. The mixing cartridge (1) according to any one of the preceding claims, wherein the inner wedge-shaped swirling bodies (7) are attached to the outer wedge-shaped swirling bodies (6).

8. The mixing cartridge (1) according to any one of the preceding claims, wherein the swirling element (5) surrounds a regulating element (10) for regulating the mixed-water temperature of the mixed water.

9. The mixing cartridge (1) according to claim 8, wherein the vortex element (5) is arranged in an annular gap (11) between the regulating element (10) and a housing (12) of the mixing cartridge (1).

10. The mixing cartridge (1) according to claim 8 or 9, comprising a control gate valve (13) for regulating a flow of the hot water through the hot water inlet (3) and a flow of the cold water through the cold water inlet (4), wherein the control gate valve (13) can be moved by the regulating element (10) in an axial direction (14) of the mixing cartridge (1), and wherein a first number of cold water channels (15) for the cold water and a second number of hot water channels (16) for the hot water are formed in the control gate valve (13), and wherein the first number and the second number deviate from a third number of the outer wedge-shaped swirling bodies (6) and a fourth number of the inner wedge-shaped swirling bodies (7).

## Revendications

1. Cartouche mélangeuse (1), destinée à une robinetterie sanitaire, comportant au moins :
- une chambre de mélange (2), pourvue d'au moins une entrée d'eau chaude (3) pour de l'eau chaude et d'au moins une entrée d'eau froide (4) pour de l'eau froide et
- un élément turbulateur (5), destiné à faire tourbillonner au moins partiellement l'eau chaude et l'eau froide dans la chambre de mélange (2), l'élément turbulateur (5) comprenant une pluralité de corps turbulateurs (6) cunéiformes, extérieurs en direction radiale et une pluralité de corps turbulateurs (7) cunéiformes, intérieurs en direction radiale, **caractérisée en ce que** les corps turbulateurs (6, 7) comportent chacun une tête (28) pointue, les corps turbulateurs (6, 7) étant constitués chacun de deux branches (29) qui s'étendent en forme de V à partir de la tête (28) pointue et un angle (30) étant conçu entre les branches (29) dans la direction circonférentielle (9) de la cartouche mélangeuse (1).

2. Cartouche mélangeuse (1) selon la revendication 1 du brevet, les corps turbulateurs (6) cunéiformes extérieurs et les corps turbulateurs (7) cunéiformes intérieurs étant conçus sur une douille (8).

3. Cartouche mélangeuse (1) selon l'une quelconque des revendications précédentes du brevet, les corps turbulateurs (6) cunéiformes extérieurs et les corps turbulateurs (7) cunéiformes intérieurs étant placés en forme annulaire.

4. Cartouche mélangeuse (1) selon l'une quelconque des revendications précédentes du brevet, les corps turbulateurs (6) cunéiformes extérieurs étant écartés les uns des autres dans une direction circonférentielle (9).

5. Cartouche mélangeuse (1) selon l'une quelconque des revendications précédentes du brevet, les corps turbulateurs (7) cunéiformes intérieurs étant écartés les uns des autres dans une direction circonférentielle (9).

6. Cartouche mélangeuse (1) selon l'une quelconque des revendications précédentes du brevet, les corps turbulateurs (6) cunéiformes extérieurs et les corps turbulateurs (7) cunéiformes intérieurs étant placés en décalage mutuel dans une direction circonférentielle (9).

7. Cartouche mélangeuse (1) selon l'une quelconque des revendications précédentes du brevet, les corps turbulateurs (7) cunéiformes intérieurs étant fixés sur les corps turbulateurs (6) cunéiformes extérieurs.

8. Cartouche mélangeuse (1) selon l'une quelconque des revendications précédentes du brevet, l'élément turbulateur (5) entourant un élément de réglage (10) pour le réglage de la température d'eau mitigée de l'eau mitigée.

9. Cartouche mélangeuse (1) selon la revendication 8, l'élément turbulateur (5) étant placé dans une fente annulaire (11) entre l'élément de réglage (10) et un boîtier (12) de la cartouche mélangeuse (1).

10. Cartouche mélangeuse (1) selon la revendication 8 ou 9, comportant un curseur de réglage (13), destiné à régler un débit d'eau chaude à travers l'entrée d'eau chaude (3) et un débit d'eau froide à travers l'entrée d'eau froide (4), le curseur de réglage (13) étant ajustable par l'élément de réglage (10) dans une direction (14) axiale de la cartouche mélangeuse (1) et dans le curseur de réglage (13) étant conçus un premier nombre de canalisations d'eau froide (15) pour l'eau froide et un deuxième nombre de canalisations d'eau chaude (16) pour l'eau chaude et le premier nombre et le deuxième nombre divergeant d'un troisième nombre des corps turbulateurs (6) cunéiformes extérieurs et d'un quatrième nombre des corps turbulateurs (7) cunéiformes intérieurs.
